Europäisches Patentamt

European Patent Office

Office européen des brevets

(19)

(11) Publication number: **0 033 416**

A1

# EUROPEAN PATENT APPLICATION

(12)

(21) Application number: **80304408.0**

(22) Date of filing: **05.12.80**

(51) Int. Cl.³: **H 01 M 4/86**

(30) Priority: **03.01.80 GB 8000147**

(43) Date of publication of application:
**12.08.81 Bulletin 81/32**

(84) Designated Contracting States:
**BE CH DE FR GB IT LI NL SE**

(71) Applicant: IMPERIAL CHEMICAL INDUSTRIES LIMITED
Imperial Chemical House Millbank
London SW1P 3JF(GB)

(72) Inventor: Blythe, Anthony Reginald
15 Turpins Ride
Welwyn Hertfordshire(GB)

(72) Inventor: Reddish, Wilson
167 High Street Codicote
Hitchin Hertfordshire(GB)

(74) Representative: Sheller, Alan et al,
Imperial Chemical Industries Limited Legal Department:
Patents Thames House North Millbank
London SW1P 4QG(GB)

(54) Gas diffusion electrodes.

(57) A porous gas diffusion electrode comprises a plurality of layers (6, 7, 8, 9, 10) of conducting tape having transverse channels, the layers of tape being superimposed one upon another with their edges aligned to form the two sides (12, 13) of the electrode respectively. The open sides of the channels in one layer are thus closed by the overlying layer to form preferably tapered, transverse passages (11) extending from one side of the electrode to the other and thus providing the porosity of the electrode. The conducting layers may be formed from a single continuous tape which has been coiled to form a flat disc or a cylinder.

Fig. 2.

Fig. 3.

EP 0 033 416 A1

ELECTRODES

The invention relates to porous gas diffusion electrodes, and to their manufacture.

Porous gas diffusion electrodes are used in certain fuel cells and other electrochemical apparatus involving reactions between a liquid electrolyte and a gaseous reactant or fuel. They are normally arranged with electrolyte supplied to one side and the gaseous reactant supplied to the other side, the electrodes being porous to allow penetration of both the electrolyte and the gas so that the electrolyte/gas interface occurs adjacent an electrode surface. This is most effective when it occurs within the interstices of the porous electrode rather than at an outer surface thereof, and to this end the porosity of gas diffusion electrodes is such that the electrolyte becomes drawn into the interstices by capillary action.

Known electrodes include sintered metal electrodes wherein fine particles of metal, e.g platinum, are fused together while retaining much of their identity, thereby leaving a fine capillary porosity between them. However, the distance between the metal particles continually changes, both decreasing and increasing, as the passages traverse from one side of the electrode to the other. The degree of penetration of electrolyte is therefore difficult to predetermine by pore size, and will be optimum for only a limited number of the pores and limited electrolyte surface tensions. Consequently, penetration is generally controlled by providing pores of a size that will lead to complete filling of the interstices by capillary action, and to balance such action by the pressure of the gaseous reactant. However, without specialist equipment the sintered metal electrodes are difficult to manufacture to a desired pore size, and it is also difficult to maximise efficiency by controlling the position of the interfaces within such electrodes.

According to the present invention, there is now provided a porous gas diffusion electrode having two sides for facing an electrolyte supply and a gas supply respectively, comprising a plurality of layers of tape of which at least some layers are shaped to provide transverse channels, the layers of tape being superimposed one upon another with their edges aligned to form the two sides of the electrode respectively and with the open sides of the channels in one layer being closed by the overlying layer to form transverse passages extending from one side of the electrode to the other thereby to provide the porosity of the electrode, at least one of the two layers which form each passage being electrically conducting; and means for holding the layers together.

The electrode may be composed of a plurality of individual tapes laid one on top of another. Where these are all electrically conducting tapes in contact one with the next, further electrical interconnection may be unnecessary. However, the conducting tape may have a coating of some other material, e.g reaction catalysts, or the layers of tape may have layers of other materials interposed between them, and where such other materials are insulating, electrical interconnection between the conducting tapes is necessary.

A preferred electrode is one wherein the conducting layers are formed from a single continuous tape which has been coiled, e.g to form a flat disc or a cylinder, or has been repeatedly folded, e.g zig-zag fashion, such that portions of the tape are overlaid in the electrode with a plurality of other portions spaced along the same tape. In this way, electrical continuity is preserved even when layers of insulating material are interposed between the folds of the conducting tape or an insulating tape is wound up together with the conducting tape to provide alternate conducting and insulating layers. However, for most purposes, it is preferred that adjacent layers are conducting, and in particular that adjacent layers are portions of the same conducting tape.

The tape preferably has the transverse channels formed in one surface only, the reverse surface of the tape being substantially flat. The transverse passages formed between the channels of one layer and the flat surface of its overlying layer can then be of accurately controlled size and shape, this being determined by the size and shape of the channels. Where channels are provided in both surfaces, especially in the extreme case where the tape is simply a corrugated tape of constant thickness, there is the danger that the channels will become aligned, with the depending region of one layer fitting into the channel of the underlying layer and thereby reducing the size of the passage so formed, or even failing to provide any passage at all. This defect may be mitigated by providing a layer of flat tape between adjacent layers of corrugated tapes, tapes of the same conducting material being preferred, but other tapes, e.g tapes formed from catalytic materials, may be used.

As described above in connection with known electrodes, the electrochemical reactions for which the electrodes are used, take place in the region of the triple interface between the electrolyte/gas meniscus and the electrode's conducting surface. The electrolyte is drawn into the transverse passages by capillary action, and the remainder of the passage is filled with gas. When the capillary action occurs in a passage of constant diameter, the surface tension will pull the electrolyte the full length of the passage unless balanced by the gas pressure at the meniscus. However, such a balance is unstable, as a slight increase in gas pressure or decrease in electrolyte surface tension, e.g because of a rise in temperature, will cause the passages to become empty of electrolyte, while a slight change in the conditions in the opposite direction will cause the passages to become completely full, both effects reducing the efficiency of the electrode.

For reducing such instability, the gas side of the tape may be coated with a hydrophobic material.  However this does not give the optimum meniscus shape.

A preferred electrode is one in which the passages are tapered in a common direction from one side of the electrode to the other, the electrode then being used with its broad openings on the gas side and its narrow openings on the electrolyte side.  The taper may be constant, of varying angle or even stepped.  On account of the way it is formed, the passage will not be circular in cross section, and hence the diameters of each cross section will not be constant when measured in all mutually inclined directions.  As will be appreciated, it is the shortest diameter which is critical in determining the amount of capillary action which will occur, and hence, provided the shortest diameter is tapered, no taper is required in the other directions.

An electrode which is particularly preferred, is one in which tapered transverse passages are provided as a consequence of the transverse channels being of substantially rectangular sections which retain their width across the tape, but which are deeper at one side of the tape than the other.  This provides a stable capillary action while avoiding unnecessary reduction in the area of the interface.

According to a further aspect of the invention there is provided a method of constructing a porous gas diffusion electrode, which method comprises preparing a tape shaped with transverse channels formed in at least one surface, superimposing layers of the tape one above another with their edges aligned to form the two sides of the electrode respectively and with the open sides of the channels in one layer being closed by the overlying layer to form transverse passages extending from one side of the electrode to the other thereby to provide the porosity of the electrode; in the event that the channelled tape is electrically non-conducting, also inserting between the layers thereof tapes of conducting material and connecting together said tapes of conducting material; and securing the layers together to preserve the configuration of the electrode.

A preferred method is one wherein the plurality of superimposed layers are provided by winding a continuous length of the channelled tape into a tight disc or cylindrical shaped coil, especially where the channelled tape is made of electrically conducting material and the coil is free from any tape of other material interposed between the layers of the conducting tape.

Where all the layers are formed from tapes of the same conducting material, selection of the material for any given purpose will depend on what catalytic activity may be required of that material, and will be governed by essentially the same criteria as would be used to select the materials for electrodes of known construction. Thus for example, where a sintered platinum electrode is suitable for any particular reaction, an electrode according to the present invention may be made from platinum tape.

Channelled tapes of most ductile materials may readily be made by drawing the selected material into a wire and passing the wire between rollers shaped to give the channelled surface while flattening the wire into a tape configuration.

The invention is illustrated by reference to specific examples shown diagrammatically in the accompanying drawings, in which:

Figure 1 is a sketch of a short length of tape used in the manufacture of electrodes according to the present invention,

Figure 2 is a section through a small portion of an electrode, taken longitudinally with respect to the tapes,

Figure 3 is a transverse section through the portion shown in longitudinal section in Figure 2,

Figure 4 shows an electrode in the shape of a flat disc viewed from one side,

Figure 5 shows a cylindrical electrode, and

Figure 6 shows an electrode in the shape of a flat rectangular sheet.

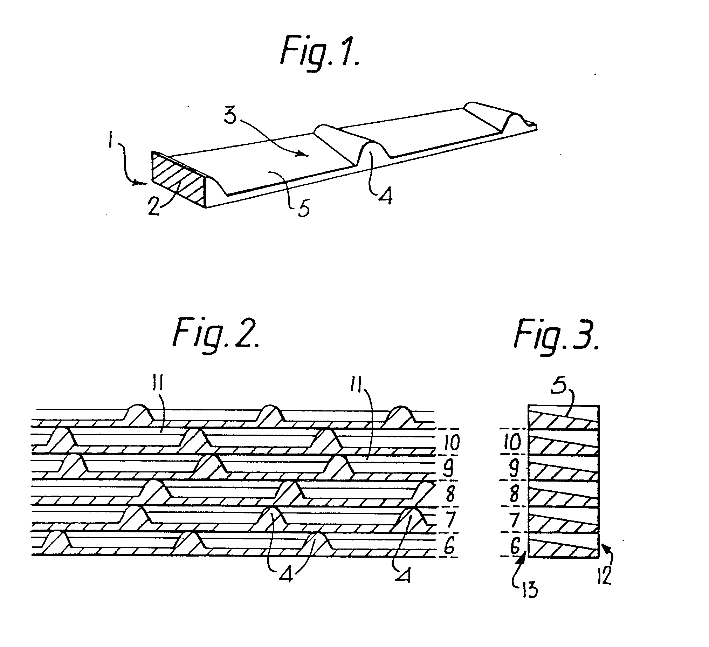

The tapes 1 shown in Figures 1 to 3 have a basic thin rectangular section 2 with shallow channels 3 formed in one surface only, adjacent channels being separated by a narrow dividing wall 4. The floor 5 of each channel slopes from one edge of the tape to the other. In Figures 2 and 3, where tapes are shown forming a plurality of layers 6, 7, 8, 9 and 10 in an assembled electrode, the floors of the channels all slope in the same direction. The open sides of each channel in a lower layer 6 are closed by the flat surface of a second layer 7 overlying it, to form a closed passage 11. Similarly, the channels of that second layer 7 are closed by their overlying layer 8 to form similar passages, and likewise for the further overlying layers 9, 10 etc. With the floors of each channel sloping from one edge of the tape to the other, the passages formed by closing the open sides of the channels, taper from one side 12 of the electrode to the other 13.

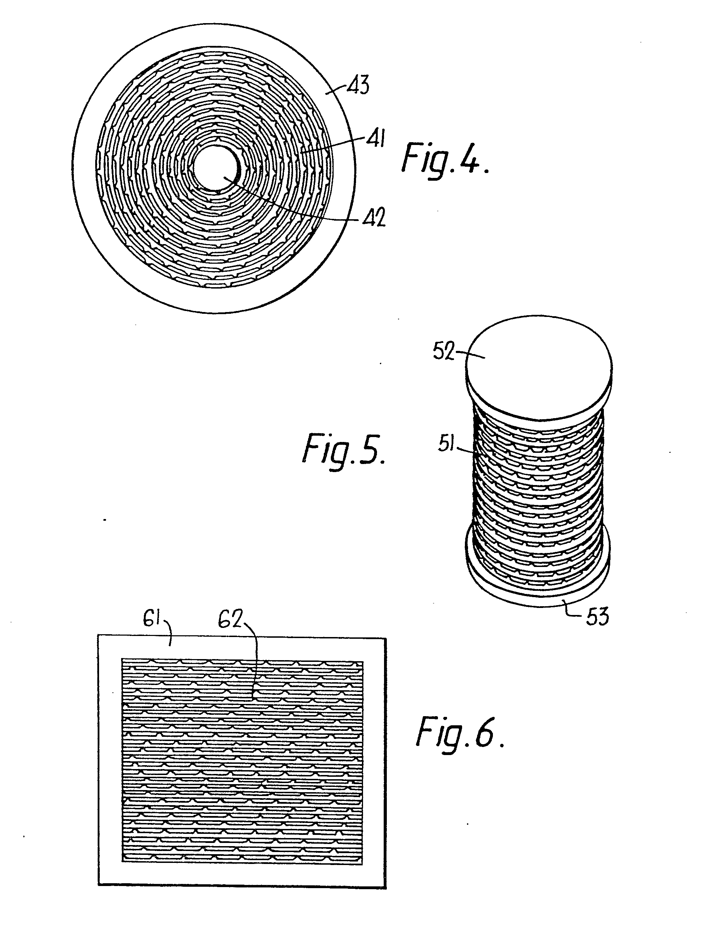

The electrode shown in Figure 4 has been formed by coiling up a tape of the kind shown in Figure 1, in such a way that each edge of the tape lies on a single plane throughout the whole of its length, thereby producing a flat disc 41. The hole left on removal of the spindle
used in the coiling operation has been filled with an
inert plug 42. After coiling, the layers of tape are held
in place by a circular frame 43, which is a tight fit
around the disc 41. For ease of illustration, only a few
layers have been shown in the drawing, but in practice
many more layers would be provided. For example, disc
electrodes we have used successfully, have typically had
over 50 turns in a disc of 24mm diameter and centre plug
of 4mm diameter.

The electrode may be used in the same manner as known
porous electrodes formed of the same materials. For
example, two such porous electrodes may be used to form an
electrolytic cell, being spaced apart for electrolyte to
flow between them and each having a chamber on its outer
surface to collect gaseous products of the electrolysis.
A similar arrangement may be used in a fuel cell except
that the gases, i.e fuel and oxygen or other oxidising
agent, are fed to the chambers. In either case, the
electrodes need not be of the same structure or materials,
but both should be porous to enable the electrolyte to
meet the gas within the pores of the electrode. The
position of that interface may be stabilised by tapering
the passages towards the electrolyte in the electrode or
electrodes constructed according to the present
invention.

In manufacturing the cylindrical electrode shown in
Figure 5, the tape 51 has been coiled such that the radius
of the coil lies within the plane of the tape, whereas in
the previous example, the radius of curvature was
perpendicular to the tape. With a thin tape, this
configuration is basically unstable, and is more easily
manufactured using a thicker tape. Although this cuts
down the porosity of the electrode, this cylindrical shape
is convenient in certain applications. The coiled tape is supported between a disc 52 and an annulus 53, between which are internal supports (not shown). The transverse channels with their sloping floors provide tapering passages extending between the outer and inner surfaces of the cylinder, the tapers of the passages being consistently outwards or inwards depending on the application.

The cylindrical electrode may be used in conjunction with a similar coaxial electrode of larger diameter, with a space between them for the electrolyte, and a gas tight can surrounding them, the latter being spaced from the outer cylinder to form a chamber therebetween. The cell so formed is then used in essentially the same manner as the previous disc electrode, with a first gas being supplied to the inner cylinder and a second gas to the chamber between the outer cylinder and the can. The passages through the inner electrode should then taper outwards while the passages through the outer electrode should taper inwards, so that in both cases the passages taper towards the electrolyte side of the electrode.

The electrode shown in Figure 6 has a flat rectangular shape, and is made up of an inert frame 61 supporting a large number of individual tapes 62 stacked one above the other in parallel layers. The tape used is substantially that shown in Figure 1, and the superimposed layers provide passages tapering from one side of the electrode to the other, as Figures 2 and 3 show in detail.

CLAIMS

1. A porous gas diffusion electrode having two sides for facing an electrolyte supply and a gas supply respectively, comprising a plurality of layers of tape of which at least some layers are shaped to provide transverse channels, the layers of tape being superimposed one upon another with their edges aligned to form the two sides of the electrode respectively and with the open sides of the channels in one layer being closed by the overlying layer to form transverse passages extending from one side of the electrode to the other thereby to provide the porosity of the electrode, at least one of the two layers which form a passage being electrically conducting; and means for holding the layers together.

2. An electrode according to claim 1 wherein the transverse channels are formed in one surface only of a tape with the reverse side of the tape being substantially flat so that the transverse passages are formed between the channels of one layer and the flat surface of its overlying layer.

3. An electrode according to either claim 1 or claim 2 wherein the transverse passages are tapered in a common direction from one side of the electrode to the other.

4. An electrode according to claim 3 wherein the tapered transverse passages are provided as a consequence of the transverse channels being of substantially rectangular section which retain their width across the tape, but which are deeper at one side of the tape than the other.

5. An electrode according to any one of the preceding claims wherein the plurality of layers of tape is provided by a plurality of individual tapes laid one on top of the other.

6.    An electrode according to claim 5 having a flat rectangular shaped derived from a plurality of individual tapes stacked one upon the other in parallel layers.

7.    An electrode according to any one of claims 1 to 4 wherein the conducting layers are formed from a single continuous tape which has been coiled or repeatedly folded such that portions of the tape are overlaid in an electrode with a plurality of other portions spaced along the same tape.

8.    An electrode according to claim 7 wherein adjacent layers are portions of the same conducting tape.

9.    An electrode according to either claim 7 or claim 8 in the shape of a flat disc or a cylinder.

10.    A method of constructing a porous gas diffusion electrode which method comprises preparing a tape shaped with transverse channels formed in at least one surface, superimposing layers of the tape one above the other with their edges aligned to form the two sides of the electrode respectively and with the open channels in one layer being closed by the overlying layer to form transverse passages extending from one side of the electrode to the other thereby to provide the porosity of the electrode; in the event that the channelled tape is electrically non-conducting, also inserting between the layers thereof tapes of conducting material and connecting together said tapes of conducting material; and securing the layers together to preserve the configuration of the electrode.

11.    A method according to claim 10 wherein the superimposed layers are provided by winding a continuous length of the channelled tape into a tight disc or cylindrical shaped coil.

12.    A method according to claim 11 wherein the channelled tape is made of electrically conducting material and the coil is free from any tape or other material interposed between the layers of the conducting tape.

13.    A method according to claim 10 wherein the superimposed layers are provided by stacking individual tapes one upon the other in parallel layers.

14.    A method according to any one of claims 10 to 13 wherein the channelled tapes are made by drawing the material selected for the tape into a wire and passing the wire between rollers shaped to give the channelled surface while flattening the wire into a tape configuration.

1/2

# Fig.1.

# Fig.2.

# Fig.3.

2/2

Fig.4.

Fig.5.

Fig.6.

European Patent Office

**EUROPEAN SEARCH REPORT**

| Category | Citation of document with indication, where appropriate, of relevant passages | Relevant to claim | CLASSIFICATION OF THE APPLICATION (Int. Cl.3) |
|---|---|---|---|
| | **DOCUMENTS CONSIDERED TO BE RELEVANT** | | |
| X | <u>DE - A - 1 546 720</u> (VARTA AG and SIEMENS A.G.)<br><br>* Claims 1,2,4,9,10; page 9, figures 9-10a,b,c * | 1-14 | H 01 M 4/86 |
| | -- | | |
| | NASA TECH. BRIEF, National Aeronautics and Space Administration, NTN-77/0472, Spring 1976 GSC-10984 "Metal Structures with parallel Pores",<br><br>* Third column, lines 15-26; figure 3, first column, lines 1-8 * | 1 | |
| | -- | | TECHNICAL FIELDS SEARCHED (Int. Cl.3)<br><br>H 01 M 4/86 8/00 |
| A | <u>FR - A - 1 382 062</u> (SIEMENS-SCHUCKERT WERKE AKT. GES.)<br><br>* Figure 3, summary point A, B1, page 2, left-hand column, lines 36-44 * | 1 | |
| | -- | | |
| A | <u>SU - A - 146 821</u> (DANIEL-BEK AND E. MINZ)<br><br>* Figure, claims * | | |
| | -- | | |
| A | <u>US - A - 3 206 334</u> (J. ROOS EHRENFELD)<br><br>* Figure 1; column 2, lines 13-36 * | | |
| | -- | | |
| | ./. | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-04-1981 | D'HONDT |

EPO Form 1503.1  06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | US - A - 3 759 747 (GLEN R. SHAER)<br>* Figures 1,2; claim 1 *<br><br>-- | | |
| A | US - A - 3 759 746 (J.McCALLUM)<br>* Figures 1,2; claim 1 *<br><br>---- | | TECHNICAL FIELDS SEARCHED (Int. Cl.³) |